(19) **Europäisches Patentamt**

**European Patent Office**

**Office européen des brevets**

(11) **EP 1 194 391 B1**

(12) **EUROPÄISCHE PATENTSCHRIFT**

(45) Veröffentlichungstag und Bekanntmachung des Hinweises auf die Patenterteilung:
**23.07.2003 Patentblatt 2003/30**

(21) Anmeldenummer: **00931186.1**

(22) Anmeldetag: **10.05.2000**

(51) Int Cl.$^7$: **C04B 28/00**, C09K 17/40

(86) Internationale Anmeldenummer:
**PCT/EP00/04249**

(87) Internationale Veröffentlichungsnummer:
**WO 00/068162 (16.11.2000 Gazette 2000/46)**

(54) **VERWENDUNG VON POLYSULFIDFREIEN ZUBEREITUNGEN ALS ZUSATZ ZU BAUMATERIALIEN AUF BASIS VON LEHM ODER TON**

USE OF POLYSULFIDE-FREE PREPARATIONS AS AN ADDITIVE FOR LOAM OR CLAY-BASED CONSTRUCTION MATERIALS

UTILISATION DE PREPARATIONS SANS POLYSULFURE COMME ADDITIF POUR MATERIAUX DE CONSTRUCTION A BASE D'ARGILE

(84) Benannte Vertragsstaaten:
**DE FR GB IT**

(30) Priorität: **11.05.1999 DE 19921815**

(43) Veröffentlichungstag der Anmeldung:
**10.04.2002 Patentblatt 2002/15**

(73) Patentinhaber: **BASF AKTIENGESELLSCHAFT**
**67056 Ludwigshafen (DE)**

(72) Erfinder:
- **DREHER, Stefan**
  **D-67433 Neustadt (DE)**
- **ROSER, Joachim**
  **B-1180 Brüssel (BE)**
- **PAKUSCH, Joachim**
  **D-67346 Speyer (DE)**
- **KNÖFEL, Dietbert**
  **D-57068 Siegen (DE)**
- **BOETTGER, Karl-Georg**
  **D-57068 Siegen (DE)**

(74) Vertreter: **Kinzebach, Werner, Dr. et al**
**Ludwigsplatz 4**
**67059 Ludwigshafen (DE)**

(56) Entgegenhaltungen:
**US-A- 5 516 830          US-A- 5 863 975**

- **DATABASE WPI Section Ch, Week 198126 Derwent Publications Ltd., London, GB; Class A18, AN 1981-46493D XP002146609 & JP 56 050156 A (NIPPON KASEI KK), 7. Mai 1981 (1981-05-07) in der Anmeldung erwähnt**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die vorliegende Erfindung betrifft die Verwendung von polysulfidfreien Zubereitungen, enthaltend wenigstens ein in Wasser dispergierbares Copolymerisat und wenigstens einen alkoxylierten ionischen oder nichtionischen Emulgator, als Zusatz zu Baumaterialien auf Basis von Lehm oder Ton.

Lehm und Ton werden aufgrund ihrer leichten Verfügbarkeit und einfachen Handhabung seit Jahrhunderten als konstruktive und dekorative Baumaterialien verwendet, z.B. zur Herstellung ungebrannter Lehm- oder Tonziegel, zum Füllen von Gefachen in Fachwerk- oder Holzständerbauten, als Putze, Mörtel oder als Füllstoffe in Decken und Wänden. In zahlreichen Monografien werden die verschiedenen dazu nötigen Techniken, wie der Lehmstampfbau, die Lehmsteinherstellung, und das Lehmstrang- oder Lehmspritzverfahren beschrieben. Um die Eigenschaften der Baumaterialien aus Lehm oder Ton zu modifizieren, z.B. um die Festigkeit und/oder die Wärmedämmung zu verbessern, sind Zusätze von organischen Materialien, wie Stroh, Holzstücken, Hobelspänen, Korkschrot und/oder Zellulose und anorganischen Materialien, wie z.B. Blähschiefer oder Muschelkalk, bekannt.

Dass solche Baumaterialien aus Lehm oder Ton in den Industrieländern keine Bedeutung mehr haben, ist vor allem auf die geringe Druckfestigkeit, die geringe Wasserfestigkeit und das starke Schwinden bei der notwendigen Trocknung der Baumaterialien aus Lehm oder Ton zurückzuführen. Hinzu kommt noch die lange Trocknungszeit für diese Baumaterialien, denn der Abbindeprozess ist im Wesentlichen eine physikalische Trocknung und dauert in den meisten Fällen 1 bis 3 Wochen.

Eine Vielzahl von möglichen Zusätzen, die diese Nachteile überwinden oder mildern sollen, sind aus der Literatur bekannt. So wird z.B. in der DE-A-41 32 009 eine rasch abbindende Mörtelmischung auf Basis von Lehm formuliert, die neben üblichen Füllstoffen einen Härter (Zement) sowie einen Abbindebeschleuniger (Gips) enthält. Die DE-A-195 42 676 offenbart eine schnellhärtende Mörtelmischung auf Basis von Lehm, die als weitere Bestandteile Zement, einen Verflüssiger, sowie Füllstoffe (Blähton, Perlite u.ä.) enthält.

Der Zusatz von Zement zu Baumaterialien aus Lehm oder Ton ist häufig problematisch, da beide Materialien ein stark unterschiedliches Schwindverhalten während des Abbindeprozesses zeigen, was zur Bildung von Rissen und damit einer starken Beeinträchtigung der mechanischen Festigkeit führt. Mildern läßt sich die Neigung zur Rißbildung nur durch möglichst langsames Trocknen in einem Klima konstanter Feuchte, was zu noch verlängerten Abbindedauern beiträgt.

Auch der Zusatz von organischen Monomeren und/oder Polymeren, kann dazu beitragen, die Eigenschaften von Baumaterialien mit mineralischen und/oder oxidischen Bestandteilen zu verbessern. So beschreibt z.B. die JP-A-49099719 ein Baumaterial auf Basis von Rotschlamm, einem oxidischen Abfall, der bei der Herstellung von Aluminium nach dem BAYER-Verfahren in großen Mengen anfällt. Dieser Rotschlamm wird mit Zement, Sand und 0,5 bis 2 Gew.-% Polymerdispersion und gegebenenfalls Wasser versetzt. In dem Beispiel werden 2 Gew.-% einer 40%igen Polyvinylacetat-Dispersion, bezogen auf die Summe von Rotschlamm und Zement, eingesetzt.

Die JP-A-58190864 beschreibt farbige Beschichtungsmittel für den Strassenbau aus Rotschlamm, synthetischen Harzen und Zuschlägen. Als synthetisches Harz kommt eine 30-80 Gew.-%ige Emulsion, enthaltend ein oder mehrere Polymere, wie Polyvinylacetat, Polyvinylacetat-Ethylen, Polyvinylacetat-DAAM, Polyolefine, Polyvinylchloride und/oder Epoxyharze in Frage. Auch die JP-A-49099781 beschreibt Baumaterialien auf Basis von Rotschlamm, wobei der Rotschlamm mit Verstärkungsagenzien oder Polymerdispersionen gemischt, geformt und bei 100°C getrocknet wird. Anschließend werden die so erhaltenen Baumaterialien im Hochvakuum entgast, mit Monomeren, wie z.B. Methylmethacrylat, das ca. 1 Gew.-% Benzoylperoxid und 1 Gew.-% Silan enthält, getränkt und anschließend durch Tauchen in heißes Wasser gehärtet. In der JP-A-4843051 werden Mischungen von Schlamm mit Blähmitteln, Natriumsilikat, Dolomit, Gips, Perlit und wasserabstoßenden Silikonen mit einer Ethylen-Vinylacetat-Copolymeremulsion, Poly(alkylen-oxid) und einem aromatischen Diisocyanat vermischt, mit heißer Luft und einem Mikrowellentrockner getrocknet und heiß zu feuerfesten Baumaterialplatten verpreßt.

Aus der US-A-4,243,563 sind wäßrige Zusammensetzungen, die Calciumpolysulfid enthalten, zur Stabilisierung und Verfestigung von Erdreich, bekannt. Neben dem Calciumpolysulfid, das für die verfestigende Wirkung verantwortlich gemacht wird, enthalten die Zusammensetzungen eine ausreichende Menge eines Emulgators, der mit dem Calciumpolysulfid kompatibel ist und das Eindringen des Calciumsulfids in den Boden erleichtert und ein dispergiertes organisches Polymer mit einem mittleren Molekulargewicht zwischen 5000 und 600 000. In den Beispielen werden ausschließlich Vinylacetatcopolymere eingesetzt. Primär werden die Zusammensetzungen zum Imprägnieren oder Tränken von Böden und Bauwerken aber auch zum Mischen mit Aushub umgesetzt und die Gemische z.B. zum Bau von Dämmen oder zur Herstellung von Bausteinen für Adobe-Bauten verwendet. Für diese Zusammensetzungen sind jegliche Emulgatoren geeignet, sofern sie mit dem Calciumpolysulfid verträglich sind, d.h. dieses nicht zum Koagulieren bringen.

Die JP-A-5650156 offenbart ein Verfahren zur Verbesserung der Eigenschaften von lehmhaltiger Erde als Baumaterial durch Zusatz von 5 bis 40 Gew.-% einer Ethylen-Vinylacetat-Copolymerisatemulsion mit einem Ethylenanteil von 5 bis 30 Gew.-%. Die Ethylen-Vinylacetat-Copolymerisatemulsion wird durch Emulsionspolymerisation unter Druck in Gegenwart eines geeigneten Emulgators und Schutzkolloids hergestellt. Die so hergestellte Emulsion wurde in Vergleichsversuchen mit einem natürlichen Latex und einer Emulsion auf Acrylbasis verglichen. Dazu wurden mit allen Dispersionen Lehm-Probequader mit Dispersionsgehalten von 5 bis 20% hergestellt. Der Latex und die Emulsion auf Acrylbasis erwiesen sich in den Vergleichsversuchen als ungeeignet, zum einen wegen der ungenügenden Stabilität der mit diesen Vergleichsemulsionen hergestellten Probekörper, die zum Teil weniger als 50% der Belastbarkeit der mit Ethylen-Vinylacetat-Emulsionen hergestellten Probekörper betrug, zum anderen wegen des unangenehmen Geruchs, der bei den Probekörpern mit den Vergleichsemulsionen beobachtet wurde. Nachteilig an diesem Verfahren ist, dass die Ethylen-Vinylacetat-Copolymerisatemulsion die Verarbeitbarkeit, d.h. das Einstellen der Konsistenz des Lehm/Emulsionsgemischs und die anschließende Handhabung, z.B. beim Fördern und Formen des Gemischs, gegenüber unbehandeltem Lehm verschlechtert. Außerdem zeigen die nach diesem Verfahren hergestellten Baumaterialien gegenüber reinem Lehm ein zum Teil noch erhöhtes Schwinden während des Abbindeprozesses.

Der vorliegenden Erfindung lag daher die Aufgabe zugrunde, einen Zusatz zur Verbesserung der mechanischen Festigkeit und der Wasserfestigkeit von Baumaterialien auf Basis von Lehm oder Ton zur Verfügung zu stellen, der eine gute Verarbeitbarkeit aufweist, d.h. sich gut in die Baumaterialien einarbeiten läßt und günstige Eigenschaften bei der Weiterverarbeitung der Baumaterialien zeigt, und ohne zusätzliche Härtungsschritte, wie Erhitzen, Bestrahlen, etc. auskommt. Das für Baumaterialien auf Basis von Lehm oder Ton typische, jedoch unerwünschte Schwinden während des Abbindevorgangs sollte verringert werden.

Überraschenderweise wurde nun gefunden, dass man einen Zusatz für Baumaterialien, insbesondere ungebrannte Baumaterialien, auf Basis von Lehm oder Ton erhält, der die Nachteile des Standes der Technik überwindet, den Baumaterialien gute mechanische Festigkeit und Wasserbeständigkeit verleiht und sich durch eine gute Verarbeitbarkeit auszeichnet, wenn man als Bestandteile des Zusatzes ein in Wasser dispergierbares Copolymerisat zusammen mit 0,5 bis 10 Gew.-% wenigstens eines alkoxylierten ionischen oder nichtionischen Emulgators verwendet.

Gegenstand der vorliegenden Erfindung ist daher die Verwendung von polysulfidfreien Zubereitungen, enthaltend, bezogen auf den Feststoffgehalt, 40 bis 99,5 Gew.-% wenigstens eines in Wasser dispergierbaren Copolymerisats und 0,5 bis 10 Gew.-% wenigstens eines alkoxylierten ionischen oder nichtionischen Emulgators, als Zusatz zu Baumaterialien auf Basis von Lehm oder Ton.

Insbesondere war überraschend, dass die vorteilhaften Eigenschaften der erfindungsgemäßen Zubereitungen auf die Baumaterialien aus Lehm oder Ton nur eine geringe Abhängigkeit von der chemischen Struktur der zur Herstellung der Copolymerisate eingesetzten Monomeren zeigten.

Baumaterialien auf Basis Lehm oder Ton enthalten im mineralischen Anteil vorzugsweise wenigstens 10 Gew.-%, insbesondere wenigstens 20 Gew.-% und bevorzugt wenigstens 30 Gew.-% Lehm oder Ton.

Alle Mengenangaben bezüglich Lehm oder Ton beziehen sich auf den Feststoffgehalt von Lehm oder Ton. Der Feststoffgehalt von Lehm oder Ton wird durch 24-stündiges Trocknen bei 120°C bestimmt. Als mineralischer Anteil werden die Trockenfeststoffe der Baumaterialien ohne zugesetzte poröse Stoffe verstanden.

Alle Mengenangaben, die die erfindungsgemäß verwendete Zubereitung und deren Bestandteile, insbesondere das Copolymerisat, den Emulgator und den Verflüssiger, betreffen, sind als Feststoff gerechnet, sofern nichts anderes angegeben ist.

Die Feststoffgehalte der Zubereitungen und Zubereitungsbestandteile werden durch Trocknen bei 120°C bis zur Gewichtskonstanz bestimmt.

Die zur Anwendung kommenden Copolymerisate sind bekannt, im Handel erhältlich oder können nach bekannten Methoden hergestellt werden.

Die Herstellung der Copolymerisate kann durch alle Arten der radikalischen Copolymerisation ethylenisch ungesättigter Monomere, z.B. durch Lösungs-, Fällungs-, Substanz-, Emulsions- oder Suspensionspolymerisation erfolgen. Bevorzugt werden die Copolymerisate mittels radikalischer, wässriger Emulsionspolymerisation in Gegenwart wenigstens eines radikalischen Polymerisationsinitiators und gegebenenfalls einer oder mehrerer grenzflächenaktiver Substanzen, durchgeführt. Vorzugsweise liegt das in Wasser dispergierbare Copolymerisat als Polymerteilchen mit mittleren Teilchengrößen im Bereich von 50 bis 1000 nm, insbesondere 50 bis 500 nm, besonders bevorzugt 60 bis 250 nm, vor. Verfahren zur Einstellung der Polymerteilchengröße sind beispielsweise aus der EP-A-126699, der EP-A-567 881, der EP-A-567 819, der DE-A-31 47 008 und der DE-A-42 13 967 bekannt.

Die wässrige Emulsionspolymerisation kann in üblicher Weise erfolgen, z.B. wie beispielsweise in der "Encyclopedia of Polymer Science and Technology", Vol. 5, Wiley & Sons Inc., NY 1966, S. 847) beschrieben . Auch in Wasser dispergierbare Copolymerisate in Form mehrphasiger Teilchen sind brauchbar. Ihre Herstellung kann z.B. durch sequentielle Verfahren, wie z.B. in der EP-555959, EP-308753 und EP-654454 beschrieben, erfolgen.

Die Polymerisation wird in üblicher Weise in Gegenwart von Radikale bildenden Verbindungen (Initiatoren) durchgeführt. Man benötigt von diesen Verbindungen vorzugsweise 0,05 bis 10, besonders bevorzugt 0,2 bis 5 Gew.-%, bezogen auf die bei der Polymerisation eingesetzten Monomeren.

Man kann auch höhermolekulare Copolymerisate verwenden, die in Gegenwart von üblichen Vernetzern polymerisiert worden sind. Geeignete Vernetzer sind dem Fachmann bekannt, z.B. aus der DE 197 29 161.9, auf die hiermit in vollem Umfang Bezug genommen wird.

Die zur erfindungsgemäßen Anwendung kommenden Zubereitungen können beliebig, z.B. als Feststoff, als wäßrige Dispersion oder sonstige lösungsmittelhaltige oder lösungsmittelfreie Formen ausgestaltet sein. Vorzugsweise kommen die erfindungsgemäßen Zubereitungen als wäßrige Dispersionen, insbesondere lösungsmittelarme oder lösungsmittelfreie wäßrige Dispersionen, oder als Feststoff, z.B. als Pulver oder Granulat, zum Einsatz.

Die in Wasser dispergierbaren Copolymerisate enthalten in der Regel mindestens zwei verschiedene Monomere einpolymerisiert. Geeignete Monomere sind in der Regel ausgewählt unter vinylaromatischen Monomeren, wie Styrol, $\alpha$-Methylstyrol, o-Chlorstyrol oder Vinyltoluole, den Estern ethylenisch ungesättigter $C_3$-$C_8$-Mono- oder $C_4$-$C_8$-Dicarbonsäuren mit $C_1$-$C_{12}$- und insbesondere $C_1$-$C_8$-Alkanolen oder $C_5$-$C_8$-Cycloalkanolen. Geeignete $C_1$-$C_{12}$-Alkanole sind beispielsweise Methanol, Ethanol, n-Propanol, i-Propanol, 1-Butanol, 2-Butanol, Isobutanol, tert.-Butanol, n-Hexanol, 2-Ethylhexanol, und Laurylalkohol. Geeignete Cycloalkanole sind beispielsweise Cyclopentanol oder Cyclohexanol. Geeignet sind insbesondere Ester der Acrylsäure, der Methacrylsäure, der Crotonsäure, der Maleinsäure, der Itaconsäure, der Citraconsäure oder der Fumarsäure. Speziell handelt es sich um die Ester der Acrylsäure und/oder der Methacrylsäure, wie (Meth)acrylsäuremethylester, (Meth)acrylsäureethylester, (Meth)acrylsäureisopropylester, (Meth)acrylsäure-n-butylester, (Meth)acrylsäureisobutylester, (Meth)acrylsäure-1-hexylester, (Meth)acrylsäure-tert.-butylester, (Meth)acrylsäure-2-ethylhexylester, sowie ferner um die Ester der Fumarsäure und der Maleinsäure, z.B. Fumarsäuredimethylester, Maleinsäuredimethylester oder Maleinsäuredi-n-butylester. Darüber hinaus können auch $C_4$-$C_8$-konjugierte Diene, wie 1,3-Butadien, Isopren oder Chloropren als Monomere eingesetzt werden.

Monomere sind vinylaromatische Monomere, insbesondere Styrol, $\alpha$-Methylstyrol, o-Chlorstyrol und Vinyltoluol, Ester ethylenisch ungesättigter $C_3$-$C_8$-Mono- oder $C_4$-$C_8$-Dicarbonsäuren mit $C_1$-$C_{12}$-Alkanolen oder $C_5$-$C_8$-Cycloalkanolen, insbesondere die Ester der Acrylsäure, Methacrylsäure und die Ester und Halbester der Maleinsäure, Fumarsäure und Itakonsäure mit den oben genannten Alkanolen und Cycloalkanolen, und konjugierte $C_4$-$C_8$-Diene, insbesondere Butadien.

Besonders bevorzugt enthält das Copolymerisat wenigstens ein Hauptmonomeres, ausgewählt unter Acrylsäureestern von $C_1$-$C_8$-Alkanolen, Methacrylsäureestern von $C_1$-$C_8$-Alkanolen, Vinylaromaten und $C_4$-$C_8$-Diolefinen, einpolymerisiert.

Ganz besonders bevorzugt als Hauptmonomere sind Styrol, Methylmethacrylat, n-Butylacrylat, 2-Ethylhexylacrylat, Ethylacrylat und Butadien. Vorzugsweise enthalten die Copolymerisate zwei der vorstehend genannten Hauptmonomere einpolymerisiert.

Geeignet für die erfindungsgemäßen Zubereitungen sind beispielsweise:

- Copolymerisate, die als Hauptmonomere Styrol und mindestens einen Ester der Acrylsäure enthalten, vorzugsweise ausgewählt unter n-Butylacrylat, 2-Ethylhexylacrylat und Ethylacrylat; oder
- Copolymerisate, die als Hauptmonomere Methylmethacrylat und mindestens einen Ester der Acrylsäure enthalten, vorzugsweise ausgewählt unter n-Butylacrylat, 2-Ethylhexylacrylat und Ethylacrylat; oder
- Copolymerisate, die als Hauptmonomere Styrol und mindestens ein konjugiertes Dien enthalten, vorzugsweise ausgewählt unter 1,3-Butadien und Isopren; oder

Darüberhinaus enthalten die für die erfindungsgemäßen Zubereitungen geeigneten Copolymerisate mindestens ein weiteres Monomer, vorzugsweise 1 bis 5 Monomere, in einer Gesamtmenge von 1 bis 10 Gew.-%, bezogen auf den Gesamtmonomergehalt, einpolymerisiert. Insbesondere geeignet sind die nachstehend- als Comonomere bezeichneten Monomere.

Bevorzugt als Comonomere sind Acrylamid, Methacrylamid und N-$C_1$-$C_{12}$-Alkyl(meth)acrylamide, insbesondere N,N-Dimethylacrylamid und N,N-Dimethylmethacrylamid, N-Alkylol(meth)acrylamide, insbesondere N-Methylolacrylamid und N-Methylolmethacrylamid, Alkylaminoalkyl(meth)acrylate und Alkylamino(meth)acrylamide und deren Quaternisierungsprodukte, insbesondere 2-(N,N-Dimethylamino)-ethylmethacrylat und 2-(N,N,N-Trimethylammoniumethylmethacrylat-chlorid, N-Vinylverbindungen, insbesondere N-Vinylformamid, N-Vinylpyrrolidon, N-Vinylimidazol, N-Vinylcarbazol und N-Vinylcaprolactam, Allylestern von aliphatischen $C_1$-$C_{30}$-Monocarbonsäuren, insbesondere Allylacetat, Allylpropionat, Silicium-enthaltende Monomere, insbesondere Silylgruppen-enthaltende Monomere, wie z.B. Vinyltrialkoxysilane, z.B. Vinyltrimethoxysilan, Alkylvinyldialkoxysilane oder (Meth)acryloxyalkyltrialkoxysilane, z.B. (Meth)acryloxyethyltrimethoxysilan, (Meth)acryloxypropyltrimethoxysilan und Trimethoxysilylpropylmethacrylat, Glycidylgruppen-enthaltende Monomere, insbesondere Glycidylmethacrylat, Glycidylacrylat, Glycidylvinylether und Glycidylallylether, ethylenisch ungesättigte Sulfonsäuren, insbesondere Vinylsulfonsäure, 2-Acrylamido-2-methylpropansulfonsäure, 2-Acryloxyethansulfonsäure und 2-Methacryloxyethansulfonsäure, 3-Acryloxy- und 3-Methacryloxypropansulfonsäure, Vinylbenzolsulfonsäure und deren Salze, vorzugsweise deren Alkalimetallsalze oder deren Ammoniumsalze und insbesondere deren Natriumsalze, Phosphorgruppen-enthaltende Monomere, insbesondere ethylenisch ungesättigte Phosphonsäuren, wie Vinylphosphonsäure und Vinylphosphonsäuredimethylester, 1,3-Diketogruppen-enthaltende Monomere, insbesondere Acetoxyethyl(meth)acrylat und Diaceton(meth)acrylamid, Harnstoffgruppen-enthaltende Monomere, wie Ureidoethyl(meth)acrylat, Acrylamidoglycolsäure und Methacrylamidoglycolatmethylether, $\alpha,\beta$-ethylenisch ungesättigte $C_3$-$C_8$-Mono- und $C_4$-$C_8$-Dicarbonsäuren, insbesondere Acrylsäure, Methacrylsäure, Maleinsäure und Itakonsäure, $C_1$-$C_8$-Hydroxyalkylester von $\alpha,\beta$-ethylenisch ungesättigten $C_3$-$C_8$-Mono- und $C_4$-$C_8$-Dicarbonsäuren, insbesondere der oben genannten Mono- und Dicarbonsäuren, z.B. Hydroxyethyl(meth)acrylat und 4-Hydroxybutyl(meth)acrylat, Alkoxylate der vorstehend beschriebenen $C_1$-$C_8$-Hydroxyalkylester von $\alpha,\beta$-ethylenisch ungesättigten $C_3$-$C_8$-Mono- oder $C_4$-$C_8$-Dicarbonsäuren, insbesondere die Umsetzungsprodukte mit 2 bis 50 mol Ethylenoxid, Propylenoxid, Butylenoxid und/oder Mischungen davon, sowie die direkten Umsetzungsprodukte der vorstehend genannten $\alpha,\beta$-ethylenisch ungesättigten Carbonsäuren mit vorstehend genannten Alkylenoxiden, wobei die Hydroxygruppen dieser alkoxylierten Verbindungen gegebenenfalls mit $C_1$-$C_{18}$-Alkanolen verethert sein können, wie z. B. Methylpolyglycol(meth)acrylat.

Bevorzugt als Comonomere sind die $C_3$-$C_8$-Mono- oder $C_4$-$C_8$-Dicarbonsäuren, insbesondere Acrylsäure, Methacrylsäure, Acrylamid, Methacrylamid, Acrylnitril, Methacrylnitril, die $C_1$-$C_8$-Hydroxyalkylester dieser Carbonsäuren und die Alkoxylate davon, Hydroxyethylacrylat, Hydroxyethylmethacrylat, sowie Methylpolyglycolacrylat, Methylpolyglycolmethacrylat, N-Methylolacrylamid, N-Methylolmethacrylamid.

In einer bevorzugten Ausführungsform enthalten die Copolymerisate 10 bis 80 Gew.-%, vorzugsweise 20 bis 70 Gew.-% und besonders bevorzugt 25 bis 65 Gew.-% Styrol und wenigstens ein weiteres Monomer, vorzugsweise ein oder zwei weitere Monomere, ausgewählt unter n-Butylacrylat, 2-Ethylhexylacrylat oder Ethylacrylat, in einer Gesamtmenge von 20 bis 90 Gew.-%, vorzugsweise 45 bis 75 Gew.-% und besonders bevorzugt 30 bis 80 Gew.-% einpolymerisiert.

In einer weiteren bevorzugten Ausführungsform enthalten die Copolymerisate 30 bis 85 Gew.-%, vorzugsweise 40 bis 75 Gew.-% und besonders bevorzugt 50 bis 70 Gew.-% Styrol und 15 bis 70 Gew.-%, vorzugsweise 25 bis 60 Gew.-% und besonders bevorzugt 30 bis 50 Gew.-% Butadien und gegebenenfalls 5 bis 20 Gew.-% eines (Meth)acrylsäureesters von $C_1$-$C_8$-Alkanolen, einpolymerisiert.

In einer weiteren bevorzugten Ausführungsform enthalten die Copolymerisate 10 bis 80 Gew.-%, vorzugsweise 20 bis 70 Gew.-% und besonders bevorzugt 25 bis 65 Gew.-% wenigstens eines Methacrylats von $C_1$-$C_8$-Alkanolen, vorzugsweise $C_1$-$C_4$-Alkanolen und besonders bevorzugt Methylmethacrylat, und mindestens ein weiteres, vorzugsweise ein oder zwei weitere Monomere, ausgewählt unter Acrylsäureestern von $C_1$-$C_8$-Alkanolen, insbesondere n-Butylacrylat, 2-Ethylhexylacrylat und Ethylacrylat, in einer Gesamtmenge von 20 bis 90 Gew.-%, vorzugsweise 45 bis 75 Gew.-% und besonders 30 bis 80 Gew.-%, einpolymerisiert.

In den vorstehend beschriebenen Ausführungsformen enthalten die Copolymerisate darüber hinaus 1 bis 10 Gew.-%, vorzugsweise bis 7,5 Gew.-% wenigstens eines weiteren Monomers, vorzugsweise ausgewählt unter Acrylnitril, N-Methylolacrylamid, Acrylsäure, Acrylamid und Methacrylamid.

Um eine hinreichende Verbesserung der mechanischen Festigkeit der Baumaterialien auf Basis von Lehm oder Ton zu erreichen, empfiehlt es sich in der Regel, in Wasser dispergierbare Copolymerisate mit Glasübergangstemperaturen oberhalb von -50°C, bevorzugt oberhalb von -40°C, einzusetzen.

Vorzugsweise weisen die Copolymerisate der erfindungsgemäßen Zubereitungen eine Glasübergangstemperatur $T_g$ im Bereich zwischen -40 und +50°C, insbesondere im Bereich -30 bis +40°C und besonders bevorzugt im Bereich zwischen -20 und +30°C, auf. Im Prinzip sind geeignete Glasübergangstemperaturen der Copolymere nicht nach oben beschränkt, jedoch setzen die positiven Auswirkungen der erfindungsgemäßen Zubereitungen auf Baumaterialien auf Basis Lehm oder Ton in der Regel ein mögliches Verfilmen der in der Zubereitung enthaltenen Copolymerteilchen voraus. Daher sind Glasübergangstemperaturen Tg im Bereich von -30 bis +40°C und insbesondere im Bereich von -20 bis +30°C bevorzugt, da oberhalb dieser Temperaturen in der Regel eine Wärmebehandlung der Baumaterialien, die die erfindungsgemäße Zubereitung enthalten, notwendig ist, um die gewünschte Wirkung der erfindungsgemäßen Zubereitungen auf die mechanische Festigkeit und die Wasserbeständigkeit zu erzielen. Alternativ oder zusätzlich zur Wärmebehandlung kann bei Verwendung von Zubereitungen, die Copolymere mit einer $T_g$ von +30°C oder höher enthalten, durch Zusatz von permanenten und/oder temporären Filmbildehilfsmitteln eine Filmbildung der Copolymerteilchen erleichtert oder ermöglicht werden. Jedoch können zumindest die temporären, d.h. flüchtigen Filmbildehilfsmittel zu unerwünschten Emissionen und/oder Geruchsbelästigungen während und zum Teil auch nach der Trocknung führen.

Besonders bevorzugt ist daher, das in der Zubereitung enthaltene Copolymer so zu wählen, dass im Bereich von -20°C bis +25°C eine Verfilmung der Copolymerisatteilchen ermöglicht wird.

Bei Zubereitungen, bei denen Copolymerisatbestandteile unterschiedlicher Glasübergangstemperatur enthalten sind, ist es in der Regel vorteilhaft, wenn zumindest eine Glasübergangstemperatur Tg in einem der vorstehend angegebenen Bereiche liegt. Solche Zubereitungen sind z.B. durch Mischung zweier oder mehrerer unterschiedlicher Copolymerisate oder durch Polymerisationsverfahren zugänglich, die z.B. zu Stufenpolymerisaten, Polymerteilchen mit Kern-Schale-Aufbau oder sonstigen Copolymerisatteilchen mit nicht statistischer Zusammensetzung führen.

Die Einstellung der Glasübergangstemperatur $T_g$ auf einen gewünschten Wert kann sowohl durch Auswahl der entsprechenden Monomere als auch der Mengenverhältnisse der eingesetzten Monomere in dem Copolymerisat oder den Copolymerisaten erfolgen.

Unter der Glasübergangstemperatur $T_g$ wird hier die gemäß ASTM D 3418-82 durch Differentialthermoanalyse (DSC) ermittelte "midpoint temperature" verstanden (vgl. Ullmann's Encyclopedia of Industrial Chemistry, 5th Edition, Volume A 21, VCH Weinheim 1992, S. 169 sowie Zosel, Farbe und Lack 82 (1976), S. 125-134, siehe auch DIN 53765).

In diesem Zusammenhang erweist es sich als hilfreich, die Glasübergangstemperatur $T_g$ des Copolymeren P abzuschätzen. Nach Fox (T.G. Fox, Bull. Am. Phys. Soc. (Ser. II) 1, 123 [1956] und Ullmanns Enzyklopädie der technischen Chemie, Weinheim (1980), S. 17-18) gilt für die Glasübergangstemperatur von schwach vernetzten Mischpolymerisaten bei großen Molmassen in guter Näherung

$$\frac{1}{T_g} = \frac{X^1}{T_g{}^1} + \frac{X^2}{T_g{}^2} + \ldots \frac{X^n}{T_g{}^n}$$

wobei $X^1$, $X^2$, ..., $X^n$ die Massenbrüche der Monomeren 1, 2, ..., n und $T_g{}^1$, $T_g{}^2$, ..., $T_g{}^n$ die Glasübergangstemperaturen der jeweils nur aus einem der Monomeren 1, 2, ..., n aufgebauten Polymeren in Grad Kelvin bedeuten. Letztere sind z.B. aus Ullmann's Encyclopedia of Industrial Chemistry, VCH, Weinheim, Vol. A 21 (1992) S. 169 oder aus J. Brandrup, E.H. Immergut, Polymer Handbook 3rd ed, J. Wiley, New York 1989 bekannt.

Die erfindungsgemäßen Zubereitungen enthalten insbesondere 0,5 bis 10 Gew.-%, vorzugsweise 0,8 bis 7,5 Gew.-% und besonders bevorzugt 1 bis 5 Gew.-% wenigstens eines alkoxylierten ionischen oder nichtionischen Emulgators, bezogen auf den Gehalt an in Wasser dispergierbarem Copolymerisat eingesetzt. Alkoxylierte Emulgatoren sind oberflächenaktive Stoffe beziehungsweise Tenside, die mindestens eine Alkoxyeinheit und bevorzugt mehrere Alkoxyeinheiten aufweisen.

Als Alkoxylierungsmittel dienen in der Regel Alkylenoxide, insbesondere Ethylenoxid sowie Propylenoxid und Butylenoxid. Durch Umsetzungen mit mehreren verschiedenen Alkoxylierungsmitteln sind auch gemischt-alkoxylierte Verbindungen erhältlich, wobei die Addition der Alkoxylierungsmittel je nach gewähltem Verfahren sowohl statistisch als auch in Form von Blöcken erfolgen kann. Alkoxylierte Emulgatoren im Sinne dieser Erfindung sind sowohl alkoxylierte nichtionische Emulgatoren, die einen lipophilen Teil und eine oder mehrere Alkoxyeinheiten umfassen als auch ethoxylierte ionische Emulgatoren, die einen lipophilen Teil, eine oder mehrere Alkoxyeinheiten und mindestens eine ionische Gruppierung umfassen. Als lipophiler Teil dienen vorzugsweise Kohlenwasserstoffreste mit mindestens 6 Kohlenstoffatomen, bevorzugt höchstens 60 Kohlenstoffatomen und besonders bevorzugt mit 7 bis 30 Kohlenstoffatomen.

Geeignet als lipophiler Bestandteil der Emulgatoren sind z.B. aliphatische und/oder aliphatisch-aromatische Alkohole, Amide, Amine oder Carbonsäuren, insbesondere Fettsäuren, Fettalkohole, Oxoalkohole, die sich davon ableitenden Amine, Amide und Salze, Phenole, Alkylphenole, Hydroxy- oder Aminonaphthaline und Dicarbonsäuren, insbesondere Bernsteinsäure, die gegebenenfalls mit ionischen Gruppen modifiziert bzw. substituiert sein können. Geeignete alkoxylierte Emulgatoren erhält man z.B. durch Umsetzung vorstehend genannter Verbindungen mit Alkoxylierungsmitteln, vorzugsweise mit Ethylenoxid oder Propylenoxid. Geeignet als ionische Gruppen sind beispielsweise Sulfatgruppen, Sulfonatgruppen, Carboxylatgruppen, Alkoholatgruppen und Ammoniumgruppen. Bevorzugt als ionische Gruppen sind anionische Gruppen, insbesondere Sulfat-, Sulfonat-, Carboxylat- und Alkoholatgruppen.

Vorzugsweise weisen die Emulgatoren 2 bis 200 Alkoxyeinheiten auf.

Bevorzugt ist der Emulgator ein mit 3 bis 150 mol, vorzugsweise 4 bis 100 mol und besonders bevorzugt 5 bis 80 mol Ethylenoxid alkoxylierter Alkohol mit mindestens 6, vorzugsweise mindestens 8 und besonders bevorzugt 10 bis 25 Kohlenstoffatomen , der gegebenenfalls eine oder mehrere ionische Gruppen, ausgewählt unter Sulfat, Sulfonat, Carboxylat, Phosphat und Phosphonat, vorzugsweise Sulfat oder Sulfonat, aufweist.

Geeignete nichtionische Emulgatoren sind beispielsweise ausgewählt unter $C_6$-$C_{18}$-Alkylphenolpolyethoxylaten oder -propoxylaten, $C_8$-$C_{32}$-Alkyl- und -Alkenylethoxylaten oder -propoxylaten, Polyalkylenoxidaddukten, wie Ethylenoxid-Propylenoxid-Blockcopolymeri-saten, Fettsäurealkylolamidoethoxylaten, ethoxylierten Fettsäuren, Fettaminen, Fettsäureamiden und Alkansulfonamiden, die 3 bis 150, vorzugsweise 4 bis 100 und bevorzugt 5 bis 80 Alkoxyeinheiten aufweisen.

Geeignete anionische Emulgatoren sind vorzugsweise ausgewählt unter $C_6$-$C_{18}$-Alkylphenolpolyethoxysulfonaten oder -sulfaten, $C_8$-$C_{32}$-Alkyl- oder Alkenylpolyethoxysulfonaten bzw. -sulfaten, $C_8$-$C_{32}$-Alkylglycerylpolyethoxysulfonaten, ethoxylierten Sulfobernsteinsäurehalb- und -diestern, $C_8$-$C_{32}$-Alkyl-, Alkenyl- oder Dialkylpolyethoxyphosphaten, ethoxylierten ein- und mehrfach kernsulfonierten Mono- und Dialkylbiphenylethern, ethoxylierten $\alpha$-Sulfofettsäureestern, ethoxylierten Fettsäuremonogyceriden, Fettsäurealkanolaminsulfaten, ethoxylierten Fettsäureestern, ethoxylierten Fettsäuresarkosiden, -glycolaten, -lactaten, ) -tauriden und -Isothionaten, die 4 bis 150, vorzugsweise 5 bis 100 und besonders bevorzugt 6 bis 80 Alkoxyeinheiten aufweisen.

Besonders bevorzugt als Emulgatoren sind $C_9$-$C_{18}$-Alkyl- und Alkenylethoxylate und -propoxylate, insbesondere Ethoxylate, mit 2 bis 50, vorzugsweise 5 bis 35 Alkoxyeinheiten, $C_6$-$C_{16}$-Alkylphenolethoxylate und -propoxylate, insbesondere -ethoxylate, mit 5 bis 50, vorzugsweise 10 bis 30 Alkoxyeinheiten, Polyalkylenoxidcopolymere, insbesondere Ethylenoxid/Propylenoxid-Copolymerisate, z.B. in Form von amphiphilen 2-, 3- und Mehrblockcopolymeren mit einem massenmittleren Molekulargewicht im Bereich von 200 bis 20 000, vorzugsweise 1000 bis 10 000, und einem Ethylenoxid/Propylenoxid-Verhältnis im Bereich von 10:1 bis 1:2. Weitere besonders bevorzugte Emulgatoren sind ionische Emulgatoren, wie $C_9$-$C_{18}$-Alkyl- und Alkenylpolyethoxysulfate und -sulfonate mit 1 bis 50, vorzugsweise 2 bis 35 Alkoxyeinheiten und $C_6$-$C_{16}$-Alkylphenolpolyethoxysulfate und -sulfonate, insbesondere Octylphenolpolyethoxysulfate und -sulfate und Nonylphenolpolyethoxysulfate und -sulfonate, vorzugsweise mit 1 bis 50 und besonders bevorzugt 2 bis 35 Alkoxyeinheiten.

Die erfindungsgemäßen Zubereitungen können einen oder mehrere ethoxylierte Emulgatoren enthalten.

In bevorzugten Ausführungsformen der vorliegenden Erfindung wird ein Gemisch eines nichtionischen alkoxylierten Emulgators und eines ionischen, vorzugsweise anionischen, alkoxylierten Emulgators eingesetzt, beispielsweise ein Gemisch aus einem ethoxylierten Fettalkohol und einem Natriumalkylpolyethoxysulfat, oder ein Gemisch aus einem Nonylphenolpolyethoxysulfat und einem Octylphenolpolyethoxylat oder ein Gemisch eines Nonylphenolpolyethoxysulfates mit einem ethoxylierten Fettalkohol.

Gegebenenfalls können die erfindungsgemäßen Zubereitungen auch nichtalkoxylierte ionische oder nichtionische Emulgatoren enthalten, jedoch sind in der Regel mindestens 50 Gew.-%, vorzugsweise mindestens 75 Gew.-% der eingesetzten Emulgatoren alkoxylierte ionische und/oder nichtionische Emulgatoren. Vorzugsweise sind die erfindungsgemäßen Zubereitungen im Wesentlichen frei von nichtalkoxylierten Emulgatoren.

Darüberhinaus können die erfindungsgemäßen Zubereitungen übliche Schutzkolloide enthalten. Vorzugsweise wurden bei der Herstellung der Copolymerisate keine Schutzkolloide eingesetzt. Wenn die Zubereitungen Schutzkolloide enthalten, werden diese bevorzugt erst nach der Herstellung der Copolymerisate zugesetzt.

Die vorstehend genannten oberflächenaktiven Substanzen, insbesondere die Emulgatoren, können ganz oder teilweise bei der Herstellung der Copolymerisate eingesetzt werden, ganz oder teilweise nach der Herstellung der Copolymerisate zugesetzt werden oder ganz oder teilweise bei der Verwendung zur Herstellung der erfindungsgemäßen Baumaterialien zugesetzt werden. Bei der Herstellung der erfindungsgemäß einzusetzenden Copolymerisate durch radikalische Emulsions-Polymerisation in wässrigen Medien hat es sich als vorteilhaft erwiesen, mindestens 25 Gew.-%, vorzugsweise mindestens 50 Gew.-% und besonders bevorzugt mindestens 75 Gew.-% der Gesamtmenge der Emulgatoren bei der Herstellung der Copolymerisate einzusetzen.

Wenn die Copolymerisate nicht im wässrigen Medium erhalten werden, kann es vorteilhaft sein, mindestens 25 Gew.-%, vorzugsweise mindestens 50 Gew.-% und insbesondere mindestens 75 Gew.-% des Emulgators nach der Herstellung der Copolymerisate zuzugeben.

Die erfindungsgemäß verwendeten Zubereitungen können in fester Form, z.B. als Pulver oder Granulate, in halbfester Form, z. B. als pastöse Masse, oder flüssiger Form, z.B. als Dispersion eingesetzt werden. Bevorzugt sind die feste Form und die flüssige Form, insbesondere als Dispersion. Wenn die erfindungsgemäß einzusetzenden Copolymerisate durch radikalische Polymerisation in wässrigem Medium erhalten werden, können sie direkt, gegebenenfalls nach Einstellen des Feststoffgehaltes, oder nach Trocknen, vorzugsweise nach Sprühtrocknen, für die erfindungsgemäßen Zubereitungen eingesetzt werden. Wenn die erfindungsgemäßen Zubereitungen in Form einer wässrigen Dispersion eingesetzt werden, liegt der Feststoffgehalt der Zubereitung, d.h. der Anteil der nichtflüchtigen Bestandteile, in der Regel im Bereich von 20 bis 80 Gew.-%. Vorzugsweise werden die erfindungsgemäßen Zubereitungen, bezogen auf den Feststoffgehalt, als 30 bis 70 Gew.-%ige, insbesondere 35 bis 60 Gew.-%ige und besonders bevorzugt 40 bis 55 Gew.-%ige wässrige Dispersion eingesetzt.

Bei als wässrige Dispersion eingesetzten Zubereitungen liegt die Viskosität in der Regel im Bereich von 10 bis 2500 mPas, vorzugsweise 100 bis 1500 mPas, gemessen als 40 Gew.-%ige Dispersion in einem Rotationsviskosimeter gemäß DIN 53019 bei 23°C und einer Schergeschwindigkeit von 250 s$^{-1}$. Das wässrige Dispergiermedium der erfindungsgemäßen Zubereitungen kann organische Lösungsmittel, vorzugsweise mit Wasser mischbare organische Lösungsmittel, wie z.B. Alkohole, Diole und Polyole enthalten. Vorzugsweise liegt der Gehalt an organischen Lösungsmitteln unter 10 Gew.-%, bezogen auf das Gesamtgewicht der Zubereitung, besonders bevorzugt sind die Zubereitungen im Wesentlichen frei von organischen Lösungsmitteln.

Die Zubereitungen können übliche Hilfsmittel enthalten. Die Hilfsmittel werden in der Regel in Mengen von insgesamt 0,1 bis 30 Gew.-% eingesetzt. Übliche Hilfsmittel sind beispielsweise Netzmittel, Fungizide, Entschäumer, wie z.B. die kommerziell erhältlichen Entschäumer der Fa. BASF (Ludwigshafen), der Fa. Münzig (Heilbronn) und der Fa. Wacker (München), Verdickungsmittel, Gefrierschutzmittel, Verlaufsförderer, Weichmacher und Filmbildehilfsmittel. Geeignete Filmbildehilfsmittel sind beispielsweise Ethylenglykol, Propylenglykol, Butylenglykol, Hexylenglykol, Diethylenglykol, Dipropylenglykol, Dibutylenglykol, deren Halbether mit $C_1$-$C_4$-Alkanolen, z.B. Diethylenglykolmonoethylether, -monobutylether, Propylenglykolmonophenylether, Propylenglykolmonopropylether, -monobutylether, Dipropylenglykolmonopropylether, -monobutylether, deren Ether-Acetate, wie Diethylenglykolmonoethyletheracetat und -monobutyletheracetat, Propylenglykolmonopropyletheracetat und -monobutyletheracetat, Dipropylenglykol-n-butyletheracetat, ferner Alkylester aliphatischer Mono- und Dicarbonsäuren, z.B. Texanol® der Eastman Kodak oder deren technische Gemische davon, z.B. Lusolvan FBH der BASF AG (Di-n-butylestergemische der Bernstein-, Glutar- und Adipinsäure). Als Weichmacher kommen alle üblichen, für Dispersionen geeigneten Weichmacher, beispielsweise (Oligo)propylenglykolalkylphenylether, wie sie z.B. als Plastilit® 3060 der BASF AG im Handel erhältlich sind, in Frage.

Die erfindungsgemäßen Zubereitungen können zusätzlich einen Verflüssiger für mineralische Bindemittel enthalten. In der Regel handelt es sich bei Verflüssigern für mineralische Bindemittel um Additive, die zur Veränderung der Eigenschaften von Bindemitteln, insbesondere der Verarbeitungskonsistenz und/oder Abbindeeigenschaften führen. In der Regel handelt es sich bei solchen Verflüssigern für mineralische Bindemittel um wasserlösliche makromolekulare Substanzen. Sie sind in solcher Menge enthalten, dass sie in den erhaltenen Baumaterialien in den unten angegebenen Mengen vorliegen.

Überraschend wurde gefunden, dass die in der Gegenwart der erfindungsgemäßen Zubereitungen beobachtete gute Verarbeitbarkeit der Baumaterialien auf Basis Lehm oder Ton und/oder die mechanischen Eigenschaften, insbesondere das Schwinden bei der Trocknung, durch die Anwesenheit eines Verflüssigers noch weiter verbessert werden können.

Vorzugsweise geeignet sind Verflüssiger auf Basis von Naphthalinsulfonsäure-Formaldehyd-Kondensaten, Melamin-Formaldehyd-Polykondensaten und/oder Ligninsulfonaten, wie z.B. in der EP-A-402 319 beschrieben, sowie auf Basis von Homo- und Copolymeren von Carbonsäuren und Dicarbonsäuren mit Styrol, wie z.B. in der EP-A-306 449 und US-A-3 952 805, oder Isobuten oder Diisobuten, wie in der DE-A-37 16 974, EP-A-338 293, DE-A-39 25 306, US-A-4 586 960, US-A-4 042 407 und US-A-4 906 298, beschrieben.

Ebenfalls geeignet sind Verflüssiger auf Basis von Copolymerisaten aus ungesättigten Carbonsäuren und Hydroxyalkylestern ungesättigter Carbonsäuren, wie z.B. in der EP 97 613 beschrieben, auf Basis einpolymerisierter Carbonsäuremonomere und Polyalkylenoxidester der Acrylsäure und der Methacrylsäure, wie z.B. in der DE-A-44 20 444 beschrieben, auf Basis von ethylenisch ungesättigten Polyoxyalkylenethern, mehrfach ungesättigten Alkenylethern und Maleinsäureanhydrid, wie beispielsweise in der EP 619 277 beschrieben, oder auf Basis von Copolymeren von Maleinsäurederivaten und Vinylmonomeren, wie beispielsweise in der DE-A-43 04 109 und der EP-A-610 699 beschrieben.

Auf die vorgenannten Publikationen wird hiermit in vollem Umfang Bezug genommen.

Derartige Verflüssiger sind beispielsweise von des Firmen ADDIMENT (Heidelberg), SKW (Troisdorf), BASF (Ludwigshafen), insbesondere die Sokalan-Marken, und DYCKERHOFF (Wiesbaden) kommerziell erhältlich.

Bevorzugt werden Verflüssiger auf Basis von Naphthalinsulfonsäurekondensaten, Copolymerisaten von Carbonsäuremonomeren und Polyalkylenoxidestern der Acrylsäure und der Methacrylsäure eingesetzt.

Der Einsatz der erfindungsgemäßen Zubereitungen führt bei einer Vielzahl von Baumaterialien auf Basis mineralischer Bindemittel zu verbesserten Eigenschaften, insbesondere erhöhter mechanischer Festigkeit, Wasserbeständigkeit und/oder Verarbeitbarkeit. Besonders vorteilhaft kommen die Eigenschaften der erfindungsgemäßen Zubereitungen bei Baumaterialien auf Basis von Lehm oder Ton, insbesondere ungebrannten Baumaterialien auf Basis von Lehm oder Ton, zum Tragen.

Tone sind den sogenannten bindigen Böden zugerechnete plastische Sedimente, die in der Regel, abhängig von ihrer mineralischen Zusammensetzung, bei Wasseraufnahme quellen und/oder plastisch verformbar werden und nach dem Trocknen ihre Form im Wesentlichen beibehalten. Tone sind meist Verwitterungsprodukte aus Feldspat und anderen Mineralien der Urgesteine und bestehen in der Regel hauptsächlich aus schichtförmigen Alumosilikaten. Die verbreitetsten Tonminerale sind Kaolinit, Montmorillonit und Illit. Darüber hinaus enthalten Tone häufig Eisenoxidhydrate und andere Eisenverbindungen, sowie Mangan-, Kalk- und Magnesiumverbindungen. Eine einheitliche chemische Zusammensetzung für Ton kann nicht angegeben werden.

Lehm ist ein meist durch feinsten Limonit (Brauneisenerz) gelb oder bräunlich gefärbter Ton mit mehr oder weniger reichlichen Beimengungen an Quarz-Körnern und -Staub, Kalk, Glimmer oder sonstigen anorganischen oder organischen Verunreinigungen. Diese Beimengungen werden in Abhängigkeit von der Partikelgröße auch als Schluff (mit einem Durchmesser von typischerweise 0,002 bis 0,06 mm), Sand (typischerweise 0,06 bis 2 mm) oder als Kies (typischerweise 2 bis 60 mm) bezeichnet. Lehm ist daher ein Gemisch aus Ton, Schluff und Sand, das Beimengungen von größeren Gesteinpartikeln sowie organischen Bestandteilen enthalten kann. Im Lehm wirkt der Ton als Bindemittel, das die übrigen Bestandteile miteinander verbindet, d.h. Schluff, Sand und Kies fungieren als Füllstoffe. Im Vergleich dazu haben Tonpartikel typischerweise einen Durchmesser von weniger als 0,002 mm. Die Komponenten Ton, Schluff und Sand können in ihrem Gewichtsanteil stark variieren, so dass auch für Lehm eine einheitliche chemische Zusammensetzung nicht angegeben werden kann.

Weiterer Gegenstand der vorliegenden Erfindung sind Baumaterialien auf Basis von Lehm und Ton, die bezogen auf den mineralischen Anteil, 1 bis 30 Gew.-% einer wie vorstehend definierten polysulfidfreien Zusammensetzung enthalten, wobei sich die Gew.-% auf die Zubereitung gerechnet als Feststoff beziehen. Vorzugsweise enthalten die Baumaterialien 2,0 bis 25 Gew.-% und besonders bevorzugt 2,5 bis 10 Gew.-% der erfindungsgemäßen Zubereitung.

Die erfindungsgemäßen Baumaterialien können darüber hinaus einen oder mehrere Verflüssiger, insbesondere Verflüssiger für mineralische Bindemittel, enthalten. Geeignete Verflüssiger sind vorstehend beschrieben. Vorzugsweise enthalten die erfindungsgemäßen Baumaterialien dann, bezogen auf den mineralischen Anteil, 0,1 bis 10 Gew.-%, insbesondere 0,5 bis 5 Gew.-% und besonders bevorzugt 0,5 bis 2 Gew.-%, eines Verflüssigers für mineralische Bindemittel (gerechnet als Feststoff).

Die erfindungsgemäßen Baumaterialien können in verschiedenen dekorativen und konstruktiven Anwendungen, insbesondere im Hausund Mauerbau, Einsatz finden.

Die erfindungsgemäßen Baumaterialien können, bezogen auf den mineralischen Anteil, gerechnet als Feststoff, 5 bis 250 Gew.-%, vorzugsweise 5 bis 100 Gew.-%, poröse Stoffe, wie Stroh, Schilf, Kork, Bims, Blähton, Perlite, Holzschnitzel oder Sägemehl enthalten. Durch Zugabe solcher poröser Stoffe oder allgemein von Füllstoffen, können die Baumaterialien auf die jeweilige Anwendung hin optimiert werden, z.B. wenn besondere Anforderungen an die Wärmedämmung und/oder das Gewicht bzw. der Dichte der Baumaterialien gestellt wird.

Die erfindungsgemäßen Baumaterialien eignen sich für eine Vielzahl von Anwendungen, vorzugsweise eignen sie sich für die Verwendung im Stampflehmbau, zum Füllen von Gefachen in Fachwerkoder Holzständerbauten, als Putz, als Mörtel, zur Herstellung von Bausteinen und zur ober- oder unterirdischen Versiegelung von Böden, beispielsweise im Rahmen von Sanierungen, als bauliche Schutzmaßnahme, z.B. bei Deponien, Rohrleitungen oder Tanklagern und insbesondere beim Damm- und Deichbau.

Die erfindungsgemäßen Zubereitungen oder die erfindungsgemäßen Baumaterialien können vorteilhaft für den Damm- und Deichbau eingesetzt werden. Dämme und Deiche bestehen in der Regel aus einem Sandkern, umgeben von einer Lehm- oder Tondeckschicht. Diese soll dem Erdwall zum einen eine mechanische Festigkeit verleihen, zum anderen wird durch die vergleichsweise hohe Dichtigkeit der Tonoder Lehmschichten ein zu starkes Eindringen von Wasser in das Innere verhindert. Zudem schützt die Deckschicht vor Abtragung des Materials durch Wind, Wasser oder sonstige Erosion (siehe auch W. Striegeler "Dammbau in Theorie und Praxis"; Verlag für Bauwesen, 2.Aufl.; 1998). Die mechanische Festigkeit, die Dichtigkeit und/oder der Schutz vor Erosion können durch Einsatz der erfindungsgemäßen Zubereitungen oder Baumaterialien verbessert werden.

Durch Zusatz von Füllstoffen kann gemäß DIN 18951 ein sogenannter Leichtlehm erhalten werden.

Weiterer Gegenstand der vorliegenden Erfindung ist ein Verfahren zur Behandlung von Baumaterialien auf Basis von Lehm oder Ton, wobei man den Baumaterialien eine wie vorstehend definierte Zubereitung zusetzt. Vorzugsweise setzt man, bezogen auf den mineralischen Anteil, 1 bis 30 Gew.-% der Zubereitung zu. Für das erfindungsgemäße Verfahren gelten die oben gemachten Ausführungen zur erfindungsgemäßen Verwendung entsprechend.

Das vorstehend beschriebene Verfahren eignet sich vorzugsweise zur Verbesserung der mechanischen Festigkeit, Beständigkeit, Wasserfestigkeit und Verarbeitbarkeit.

Zur Verarbeitung von Baumaterialien auf Basis von Lehm oder Ton müssen in der Regel Lehm- bzw. Tonschlämme hergestellt werden. Dies geschieht im Allgemeinen durch Zusatz von Wasser. Dabei wird die gewünschte Konsistenz meist über die Flüssigkeitsmenge eingestellt.

In Gegenwart der erfindungsgemäßen Zubereitungen ist der für eine geeignete Konsistenz nötige Flüssigkeitsbedarf meist deutlich reduziert. Darüber hinaus zeigen die Lehm- oder Tonschlämme in Gegenwart der erfindungsgemäßen Zubereitungen eine deutlich verbesserte Verarbeitbarkeit gegenüber Lehm oder Ton, der keine Zusätze enthält und in noch deutlicherem Maß gegenüber herkömmlichen Zusätzen auf Basis von Polymerisat-Dispersionen bzw. -Emulsionen oder dispergierbaren Polymerisaten. Diese verbesserte Verarbeitbarkeit äußert sich insbesondere dadurch, dass einfach und schnell homogene Lehm- oder Tonmassen erhalten werden, die eine geeignete Viskosität aufweisen, ohne dass in Gegenwart von Zusätzen auf Basis von Dispersionen, Emulsionen oder dispergierbaren Copolymerisaten ein Abscheiden bzw. "Ausbluten" der Polymerkomponente beobachtet wird.

Die Wasserfestigkeit der ausgehärteten Baumaterialien auf Basis von Lehm oder Ton, die die erfindungsgemäßen Zubereitungen enthalten, ist gegenüber Baumaterialien auf Basis von Lehm oder Ton, die keine Zusätze enthalten, und gegenüber herkömmlichen Dispersionen bzw. Emulsionen deutlich verbessert.

Ein weiterer Vorteil der erfindungsgemäßen Zubereitungen ist, dass sie das Schwinden der Baumaterialien auf Basis von Lehm oder Ton während des Trocknens minimieren, sowohl gegenüber unbehandelten Baumaterialien auf Basis von Lehm oder Ton als auch gegenüber herkömmlichen Zusätzen, die zum Teil sogar eine Zunahme des Schwindens verursachen. Die mechanische Festigkeit der erfindungsgemäßen Baumaterialien auf Basis von Lehm oder Ton ist nach der Trocknung gegenüber unbehandelten Lehm- oder Tonmaterialien deutlich erhöht und derjenigen mit herkömmlichen Zusätzen auf Basis von Dispersionen, Emulsionen oder dispergierbaren Polymerisaten zumindest vergleichbar.

Die nachfolgenden Beispiele erläutern die Erfindung ohne sie zu begrenzen.

Beispiele

Die in den erfindungemäßen Beispielen eingesetzten erfindungsgemäßen Zubereitungen und die Zubereitungen der Vergleichsbeispiele wurden durch radikalische Polymerisation im wässrigen Medium erhalten. In den erfindungsgemäßen Beispielen, in denen ein Verflüssiger zum Einsatz kam, wurde dieser bei der Zubereitung der erfindungsgemäßen Baumaterialien zugesetzt.

Der Feststoffgehalt (d.h. die nichtflüchtigen Anteile) wurden aus dem Gewichtsverlust einer Probe (ca. 1 g) durch 2-stündige Trocknung in einem Umlufttrockenschrank bei 120°C bestimmt. Die Viskosität der Zubereitungen wurde mit Hilfe eines Rotationsviskosimeters (Rheomat) der Firma Paar Physica bei einer Schergeschwindigkeit von $250^{-1}$ gemäß DIN 53019 bei 23°C bestimmt. Die Glasübergangstemperaturen $T_g$ wurden mit Hilfe eines Differentialkalorimeters DSC 820 der Fa. Mettler Toledo bei einer linearen Aufheizgeschwindigkeit von 5 °C/min bestimmt.

I. Herstellung der erfindungsgemäßen Zubereitungen

Zubereitung 1

In einem 4 1-Glasgefäß mit Ankerrührer (120 Upm) wurden 450 g vollentsalztes Wasser vorgelegt. Bei einer Innentemperatur von 85°C wurden 5 Gew.-% der Gesamtmenge eines Zulaufs 1 und 10 Gew.-% der Gesamtmenge eines Zulaufs 2 zugegeben. Die Reaktionsmischung wurde 10 min bei 85°C anpolymerisiert. Anschließend wurde bei 85°C innerhalb von 4 h die Restmenge von Zulauf 1 und in 4,5 h die Restmenge von Zulauf 2 räumlich getrennt kontinuierlich zugeführt. Nach weiteren 30 min bei dieser Temperatur wurde abgekühlt und das Reaktionsgemisch mit einer 25 Gew.-%igen wässrigen Calciumhydroxidlösung neutralisiert. Die so hergestellte Zubereitung enthielt 50,9 Gew.-% nichtflüchtige Anteile und hatte einen pH-Wert von 7,1. Die Viskosität betrug 432 mPas. Das in der Zubereitung enthaltene Copolymerisat besitzt eine Glasübergangstemperatur $T_g$ von -6°C.

| Zulauf 1: | |
|---|---|
| 539 g | vollentsalztes Wasser |
| 64 g | einer 35 Gew.-%igen wässrigen Lösung eines Nonylphenolpolyethoxylates mit einem Ethoxylierungsgrad von etwa 25 |
| 75 g | einer 20 Gew.-%igen wässrigen Lösung eines Octylphenolpolyethoxylats mit einem Ethoxylierungsgrad von etwa 25 |
| 780 g | Styrol |
| 660 g | 2-Ethylhexylacrylat |
| 38 g | Acrylsäure |
| 15 g | Acrylamid |
| 8 g | Methacrylamid |

| Zulauf 2: | |
|---|---|
| 95 g | vollentsalztes Wasser |
| 6 g | Natriumperoxodisulfat |

Zubereitung 2

In einem 12 1-Druckautoklaven mit Ankerrührer (120 Upm) wurden 1200 g vollentsalztes Wasser vorgelegt. Bei einer Innentemperatur von 90°C wurden 5 Gew.-% der Gesamtmenge eines Zulaufs 1 und 5 Gew.-% der Gesamtmenge eines Zulaufs 2 sowie 2 Gew.-% der Gesamtmenge eines Zulaufs 3 zugegeben. Das Reaktionsgemisch wird 10 min bei 90°C anpolymerisiert. Anschließend wurde bei 90°C innerhalb von 4 h die Restmenge von Zulauf 1 und 2 sowie innerhalb von 4,5 h die Restmenge von Zulauf 3 räumlich getrennt kontinuierlich zugeführt. Nach weiteren 60 min bei dieser Temperatur wurde abgekühlt und das Reaktionsgemisch mit einer 25 Gew.-%igen wässrigen Calciumhydroxidlösung neutralisiert. Die so hergestellte Zubereitung enthält 50,0 Gew.-% nichtflüchtige Anteile und hat einen pH-Wert von 7,5. Die Viskosität beträgt 219 mPas.

Das in der Zubereitung enthaltene Copolymerisat besitzt eine Glasübergangstemperatur Tg von +17°C.

| Zulauf 1: | |
|---|---|
| 2550 g | vollentsalztes Wasser |

(fortgesetzt)

| Zulauf 1: | |
|---|---|
| 250 g | einer 20 Gew.-%igen wässrigen Lösung eines ethoxylierten $C_{13}$-Fettalkohols mit einem Ethoxylierungsgrad von etwa 8 |
| 268 g | einer 28 Gew.-%igen wässrigen Lösung eines Natriumalkylpolyethoxysulfats mit einem Ethoxylierungsgrad von etwa 3 (Texapon NSO der Fa. Henkel) |
| 3150 g | Styrol |
| 125 g | Acrylnitril |
| 250 g | einer 48 Gew.-%igen wässrigen Lösung von N-Methylolacrylamid |

| Zulauf 2: | |
|---|---|
| 1600 g | Butadien |

| Zulauf 3: | |
|---|---|
| 720 g | vollentsalztes Wasser |
| 50 g | Natriumperoxodisulfat |

III. Herstellung der Vergleichszubereitungen

Vergleichszubereitung V1

Die Monomerenzusammensetzung und Herstellung dieser Zubereitung entspricht der der Zubereitung 1. Als Zulauf 1 wurde verwendet

| Zulauf V1: | |
|---|---|
| 430 g | vollentsalztes Wasser |
| 250 g | einer 15 Gew.-%igen wässrigen Lösung von Natriumlaurylsulfat |
| 780 g | Styrol |
| 660 g | 2-Ethylhexylacrylat |
| 38 g | Acrylsäure |
| 15 g | Acrylamid |
| 8 g | Methacrylamid |

Die Zubereitung enthält keinen ethoxylierten Emulgator. Die so hergestellte Zubereitung enthält 49,2 Gew.-% nichtflüchtige Anteile und hat einen pH-Wert von 7,2. Die Viskosität beträgt 375 mPas. Das enthaltene Copolymerisat weist eine Glasübergangstemperatur von -3°C auf.

Vergleichszubereitung V2

Die Monomerenzusammensetzung und Herstellung dieser Vergleichszubereitung entspricht der erfindungsgemäßen Zubereitung 2. Als Zulauf 1 wurde jedoch verwendet

| Zulauf V2: | |
|---|---|
| 2350 g | vollentsalztes Wasser |
| 835 g | einer 15 Gew.-%igen wässrigen Lösung von Natriumlaurylsulfat |
| 3150 g | Styrol |
| 125 g | Acrylnitril |
| 250 g | einer 48 Gew.-%igen wässrigen Lösung von N-Methylolacrylamid |

Diese Zubereitung enthält keinen ethoxylierten Emulgator. Die so hergestellte Zubereitung enthält 49,2 Gew.-% nichtflüchtige Anteile und hat einen pH-Wert von 6,8. Die Viskosität beträgt 189 mPas. Das enthaltene Copolymerisat weist eine Glasübergangstemperatur von +19°C auf.

Vergleichszubereitung V3

Als Vergleichszubereitung V3 wurde eine kommerziell erhältliche Ethylen-Vinylacetatcopolymer-Dispersion der Fa. Wacker verwendet. Diese unter dem Produktnamen VINNAPAS EP 116 erhältliche Dispersion besitzt nach Angaben des Herstellers eine Glasübergangstemperatur von +1°C, was einer ungefähren Monomerzusammensetzung von 85 Gew.-% Vinylacetat und 15 Gew.-% Ethylen entspricht. Dieses Produkt repräsentiert demnach die in der JP-56050156 beschriebenen Dispersionen bzw. Emulsionen. Als Stabilisator für das Copolymerisat in der Zubereitung ist ein Polyvinylalkohol enthalten, wie es für Ethylen-Vinylacetatcopolymerisate üblich ist. Der Feststoffgehalt dieser Zubereitung beträgt 50 Gew.-%, der pH-Wert ist 4,5.

IV. Herstellung der Lehm- bzw. Tonprobekörper

Zur Herstellung der Lehm- bzw. Tonprobekörper wurden die folgenden mineralischen Bindemittel verwendet. Ton: Kaolinitischer Ton, Kaolin-Quarzwerk Schnaitenbach (Bayern) Lehm: ziegelrohlinge aus der Ziegelei Frankenberg (Hessen) und Lehmpulver der Fa. Eider (Rheinland Pfalz).

Durch chemische Analyse und Röntgendiffraktometrie wurde die Mineralzusammensetzung des Tons aus Schnaitenbach zu etwa 96 Gew.-% Kaolinit, 3 Gew.-% Orthoklas und 1 Gew.-% Quarz und des Lehms aus Frankenberg zu etwa 75 Gew.-% Quarz, 15 Gew.-% Kaolinit, 9 Gew.-% Illit/Muskovit und etwa 1 Gew.-% Orthoklas bestimmt. Als Zuschlag wurde Normsand verwendet.

Aus den oben beschriebenen Lehmen, Tonen, Zuschlägen (Normsand) und gegebenenfalls einer erfindungsgemäßen Zubereitung oder einer Vergleichszubereitung wurden quaderförmige Probekörper in Anlehnung an DIN 1164 hergestellt. Das Gewichtsverhältnis von Lehm bzw. Ton zu Zuschlag beträgt in allen Probekörpern 1:3. Bei den Probekörpern, bei deren Herstellung ein zusätzlicher Verflüssiger eingesetzt wurde, wurde dieser in einer Menge von jeweils 2 Gew.-%, bezogen auf den Lehm bzw. Tonanteil eingesetzt. Dabei kamen die Produkte Glenium 51, ein Naphthalinsulfonsäurekondensat der Fa. SKW sowie Sokalan HP 80, ein Natriumsalz einer modifizierten Polymethacrylsäure der Fa. BASF, zum Einsatz. Die Zusammensetzung der einzelnen Proben ist in Tabelle 2 aufgeführt. Die Herstellung der Probekörper erfolgte durch mechanische Vermischung des Lehms bzw. Tons mit der jeweiligen wässrigen Zubereitung. Den wässrigen Schlämmen wurde dabei soviel zusätzliches Anmachwasser zugegeben, dass ein Ausbreitmaß von 15±0,5 cm gemäß DIN 1855 Teil 2 erreicht wurde. Das so erhaltene Material wurde in eine den vorstehend angegebenen Maßen entsprechende Form gegeben, verdichtet und anschließend bei Normklima gemäß DIN 50014-23/50 bis zur Gewichtskonstanz getrocknet. Dieser Prozess dauerte etwa 7 Tage. Als Untersuchungskriterien dienten die Verarbeitbarkeit der gemäß vorstehender Erläuterungen hergestellten Schlämme, das Schwinden der Probekörper bei der Trocknung und die Biege-, Zug- und Druckfestigkeit sowie die Wasserfestigkeit der abgebundenen Probekörper. Die Prüfungen wurden im einzelnen wie folgt durchgeführt:

Verarbeitbarkeit: Es wurde untersucht, wie sich die wässrigen Ton- bzw. Lehmschlämme herstellen und verarbeiten lassen, ob sich eine homogene Masse von geeigneter Viskosität herstellen läßt und ob ein "Ausbluten" der Polymerkomponente, d.h. eine Anreicherung der Polymerkomponente in den wässrigen Bestandteilen, zu beobachten ist. Ein hoher Bedarf an Anmachwasser, sowie eine hohe Klebrigkeit des Materials an den verarbeitungsgeräten, wie Rührer und Anmachgefäß, wurden ebenfalls als nachteilig für die Verarbeitbarkeit gewertet. Die Verarbeitbarkeit wurde in Noten von "sehr gut" bis "sehr schlecht" gemäß untenstehender Tabelle bewertet.

Schwinden: Das Schwinden wird als Längenänderung des Probekörpers im Verlauf des Aushärtens bestimmt. In Anlehnung an DIN 52450 entspricht sie dem Verhältnis der Probenlänge, gemessen nach dem Ausschalen, zur Innenlänge der Form. Angegeben wird das Schwinden in mm/m.

Biegezugfestigkeit: Die Messung der Biegezugfestigkeit wurde an einer Prüfpresse der Fa. RK Toni Technik, Typ TONICOMP III durchgeführt. Die Prüfung erfolgte an den wie vorstehend hergestellten Probekörpern. Die Laststeigerungsrate betrug 20 N/s. Die Biegezugfestigkeit wird in N/mm$^2$ angegeben.

Druckfestigkeit: Die Messung der Druckfestigkeit wurde gemäß DIN EN 196-1 an einer wie oben beschriebenen Prüfpresse durchgeführt. Es wurden dabei ebenfalls die Probekörper verwendet, die Laststeigerungsrate betrug 20 N/s.

Wasserfestigkeit: Die Wasserfestigkeit der Probe wurde durch Wasserlagerung der Probekörper über 6 Tage bei 20°C bestimmt. Die Probekörper waren die ganze Zeit vollständig von Wasser bedeckt, die überstehende Wassersäule hatte eine Höhe von 2 cm. Während und nach der Wasserlagerung wurde geprüft, ob der Probekörper erweicht, Risse aufweist oder gar zerfällt. Die Wasserfestigkeit wurde mit Noten von "sehr gut" bis "sehr gering" gemäß untenstehender Tabelle bewertet.

Die Ergebnisse der Prüfungen sind in Tabelle 1 zusammengefasst. Bewertungsskala:

1   sehr gut
2   gut
3   befriedigend
4   mäßig
5   schlecht / gering
6   sehr schlecht / sehr gering

Tabelle 1:

| | Eigenschaften der erfindungsgemäßen und nicht-erfindungsgemäßen Baumaterialien auf Basis Lehm oder Ton | | | | | | | |
|---|---|---|---|---|---|---|---|---|
| Beispiel | Zubereitung | Verflüssiger[1] [Gew.-%] | Menge d. Zubereitung [Gew.-%][4] | Verarbeitbarkeit [Note] | Schwinden [mm/m] | Biegezugfestigkeit [N/mm$^2$] | Druckfestigkeit [N/mm$^2$] | Wasserfestigkeit [Note] |
| B1 | 1 | - | 3,75 | 1 | 12 | 6,5 | 16,2 | 1 |
| B2 | 2 | - | 3,75 | 1 | 7 | 5,3 | 12,0 | 1 |
| VB1 | V1 | - | 3,75 | 4 | 16 | 5,4 | 8,5 | 3 |
| VB2 | V2 | - | 3,75 | 4 | 9 | 4,9 | 11,1 | 2 |
| VB3 | V3 | - | 3,75 | 3 | 24 | 7,0 | 16,0 | 2 |
| VB4 | - | - | - | 2 | 14 | 0,3 | 0,9 | 6 |
| B3 | 1 | 0,5[2] | 3,75 | 1 | 9 | 7,0 | 16,0 | 1 |
| B4 | 2 | 0,5[3] | 3,75 | 1 | 5 | 5,8 | 13,1 | 1 |

1) Verflüssigermenge, bezogen auf den mineralischen Anteil

2) Sokalan HP 80, Fa. BASF

3) Glenium 51, Fa. SKW

4) bezogen auf den mineralischen Anteil

EP 1 194 391 B1

Aus den Ergebnissen wird deutlich, dass der Lehm- oder Tonprobekörper ohne Polymerzusatz (VB4) eine gute Verarbeitbarkeit aufweist, jedoch ein hohes Schwinden bei Trocknung und nur eine geringe Festigkeit zeigt. Bei der Wasserlagerung dieses Probekörpers tritt über die 7 Tage ein vollständiger Zerfall ein. Die erfindungsgemäßen Beispiele B1, B2 zeigen die sehr gute Verarbeitbarkeit in Gegenwart der erfindungsgemäßen Zubereitungen. Die so erhaltenen Probekörper zeigen ein geringes Schwinden, hohe mechanische Festigkeit und eine sehr gute Wasserfestigkeit, sowohl gegenüber dem Probekörper ohne Zusatz (VB4) als auch gegenüber Probekörpern mit Vergleichszubereitungen (VB1, VB2, VB3). Bei den Probekörpern der Vergleichszubereitungen V1 und V2 wird eine nur mäßige Verarbeitbarkeit, ein erhöhtes Schwinden sowie eine deutlich geringere Wasserfestigkeit beobachtet.

Bei der Ethylen-Vinylacetat-Vergleichszubereitung im Vergleichsbeispiel VB3 ist die Verarbeitbarkeit schlechter und das Schwinden ist selbst gegenüber den Probekörpern ohne Polymerzusatz deutlich erhöht. Die Probekörper, bei denen die erfindungsgemäßen Zubereitungen um Verflüssiger ergänzt wurden (B3, B4) zeigen, dass das ohnehin geringe Schwinden der erfindunggemäßen Baumaterialien durch diesen Zusatz noch weiter verbessert und die mechanische Festigkeit noch weiter erhöht werden kann, ohne die anderen Eigenschaften zu beeinträchtigen. Bei keinem der hergestellten Probekörper B1 bis B4 trat während der Herstellung, des Prüfens oder danach ein wahrnehmbarer Geruch auf.

**Patentansprüche**

1. Verwendung von polysulfidfreien Zubereitungen, enthaltend, bezogen auf den Feststoffgehalt, 40 bis 99,5 Gew.-% wenigstens eines in Wasser dispergierbaren Copolymerisats das aufgebaut ist aus:

   - 90 bis 99 Gew.-% wenigstens eines Monomeren, ausgewählt unter vinylaromatischen Monomeren, Estern ethylenisch ungesättigter $C_3$-$C_8$-Mono- oder $C_4$-$C_8$-Dicarbonsäuren mit $C_1$-$C_{12}$-Alkanolen oder $C_5$-$C_8$-Cycloalkanolen, und konjugierten $C_4$-$C_8$-Dienen, und
   - 1 bis 10 Gew.-% wenigstens eines Comonomeren,

   0,5 bis 10 Gew.-% wenigstens eines alkoxylierten ionischen oder nichtionischen Emulgators, als Zusatz zu Baumaterialien auf Basis von Lehm oder Ton.

2. Verwendung nach Anspruch 1, wobei der Emulgator 2 bis 200 Alkoxyeinheiten aufweist.

3. Verwendung nach Anspruch 1 oder 2, wobei der Emulgator ein mit 3 bis 150 mol Ethylenoxid alkoxylierter Alkohol mit mindestens 6 Kohlenstoffatomen ist und gegebenenfalls eine oder mehrere ionische Gruppen, ausgewählt unter Sulfonat, Sulfat und Carboxylat, aufweist.

4. Verwendung nach einem der vorhergehenden Ansprüche, wobei das Copolymerisat wenigstens ein Hauptmonomer, ausgewählt unter Acrylsäureestern von $C_1$-$C_8$-Alkanolen, Methacrylsäureestern von $C_1$-$C_8$-Alkanolen, Vinylaromaten und $C_4$-$C_8$-Diolefinen, einpolymerisiert enthält.

5. Verwendung nach einem der vorhergehenden Ansprüche, wobei die Zubereitung zusätzlich einen Verflüssiger für mineralische Bindemittel enthält.

6. Verwendung nach einem der vorhergehenden Ansprüche, wobei die Zubereitung in einer Menge, gerechnet als Feststoff, von 1 bis 30 Gew.-%, bezogen auf den mineralischen Anteil der Baumaterialien, eingesetzt wird.

7. Baumaterialien auf Basis von Lehm oder Ton, enthaltend, bezogen auf den mineralischen Anteil, 1 bis 30 Gew.-% einer wie in einem der Ansprüche 1 bis 5 definierten polysulfidfreien Zubereitung, gerechnet als Feststoff.

8. Baumaterialien nach Anspruch 7, enthaltend, bezogen auf den mineralischen Anteil, 0,1 bis 10 Gew.-% eines Verflüssigers für mineralische Bindemittel.

9. Baumaterial nach Anspruch 7 oder 8, enthaltend, bezogen auf den mineralischen Anteil, 5 bis 250 Gew.-% poröse Stoffe, wie Stroh, Schilf, Kork, Bims, Blähton, Perlite, Holzschnitzel oder Holzsägemehl.

10. Verwendung der Baumaterialien gemäß den Ansprüchen 7 bis 9 im Stampflehmbau, zum Füllen von Gefachen in Fachwerk- oder Holzständerbauten, als Putz oder Mörtel, zur Herstellung von Bausteinen oder zur ober- oder unterirdischen Versiegelung von Böden, insbesondere im Damm- und Deichbau.

**11.** Verfahren zur Behandlung von Baumaterialien auf Basis von Lehm oder Ton, wobei man den Baumaterialien eine wie in den Ansprüchen 1 bis 5 definierte Zubereitung zusetzt.

**12.** Verfahren nach Anspruch 11, wobei man, bezogen auf den mineralischen Anteil, 1 bis 30 Gew.-% der Zubereitung zusetzt.

**13.** Verfahren nach Anspruch 11 oder 12 zur Verbesserung der mechanischen Festigkeit, Beständigkeit, Wasserfestigkeit und Verarbeitbarkeit.

**Claims**

**1.** The use of polysulfide-free preparations comprising, based on solids content, from 40 to 99.5% by weight of at least one water-dispersible copolymer composed of:

- from 90 to 99% by weight of at least one monomer selected from the class consisting of vinylaromatic monomers, esters of ethylenically unsaturated $C_3$-$C_8$ mono- or $C_4$-$C_8$ dicarboxylic acids with $C_1$-$C_{12}$ alkanols or $C_5$-$C_8$ cycloalkanols, and conjugated $C_4$-$C_8$ dienes, and

- from 1 to 10% by weight of at least one comonomer, and from 0.5 to 10% by weight of at least one alkoxylated ionic or nonionic emulsifier as an additive for construction materials based on loam or clay.

**2.** The use as claimed in claim 1, where the emulsifier has from 2 to 200 alkoxy units.

**3.** The use as claimed in claim 1 or 2, where the emulsifier is an alcohol alkoxylated with from 3 to 150 mol of ethylene oxide and having at least 6 carbon atoms and, if desired, has one or more ionic groups, selected from the class consisting of sulfonate, sulfate and carboxylate.

**4.** The use as claimed in any one of the preceding claims, where the copolymer contains at least one main polymerized monomer selected from the class consisting of acrylates of $C_1$-$C_8$ alkanols, methacrylates of $C_1$-$C_8$ alkanols, vinylaromatics and $C_4$-$C_8$ diolefins.

**5.** The use as claimed in any one of the preceding claims, where the preparation also comprises a superplasticizer for mineral binders.

**6.** The use as claimed in any one of the preceding claims, where the amount used of the preparation, calculated as solid, is from 1 to 30% by weight, based on the mineral content of the construction materials.

**7.** A construction material based on loam or clay comprising, based on the mineral content, from 1 to 30% by weight of a polysulfide-free preparation as defined in any one of claims 1 to 5, calculated as solid.

**8.** A construction material as claimed in claim 7, comprising, based on the mineral content, from 0.1 to 10% by weight of a superplasticizer for mineral binders.

**9.** A construction material as claimed in claim 7 or 8, comprising, based on the mineral content, from 5 to 250% by weight of porous substances, such as straw, reeds, cork, pumice, expanded clay, perlites, wood chips or shavings or sawdust.

**10.** The use of the construction materials as claimed in any of claims 7 to 9 in rammed-earth construction, for filling the spaces between the timbers in half-timbered or timber-frame buildings, as a render or mortar, for producing building blocks or for the sealing of ground either below or above its surface, in particular in the construction of dams or dykes.

**11.** A process for treating'construction materials based on loam or clay, where a preparation as defined in any of claims 1 to 5 is added to the construction materials.

**12.** A process as claimed in claim 11 where the amount of the preparation used is from 1 to 30% by weight, based on the mineral content.

**EP 1 194 391 B1**

**13.** A process as claimed in claim 11 or 12 for improving mechanical strength, stability, water resistance and ease of use.

**Revendications**

1. Utilisation de préparations exemptes de polysulfures, contenant, par rapport à la teneur en matière solide, 40 à 99,5 % en poids d'au moins un copolymère dispersable dans l'eau, qui est constitué de :

   • 90 à 99% en poids d'au moins un monomère choisi parmi des monomères vinyl-aromatiques, dès esters d'acides mono en $C_3$-$C_8$ ou di- en $C_4$-$C_8$-carboxyliques éthyléniquement insaturés avec des alcanols en $C_1$-$C_{12}$, ou des cycloalcanols en $C_5$-$C_8$, et des diènes en $C_4$-$C_8$ conjugués, et
   • 1 à 10 % en poids d'au moins un comonomère, 0,5 à 10 % en poids d'au moins un émulsifiant ionique ou non ionique alcoxylé,

   comme additif à des matériaux de construction à base de terre glaise ou d'argile.

2. Utilisation selon la revendication 1, l'émulsifiant comportant 2 à 200 unités alcoxy.

3. Utilisation selon la revendication 1 ou 2, l'émulsifiant étant un alcool alcoxylé avec 3 à 150 moles d'oxyde d'éthylène comportant au moins 6 atomes de carbone et comportant, le cas échéant, un ou plusieurs groupes ioniques choisis parmi le sulfonate, le sulfate et le carboxylate.

4. Utilisation selon l'une quelconque des revendications précédentes, le copolymère contenant sous forme polymérisée au moins un monomère principal, choisi parmi des esters acryliques d'alcanols en $C_1$-$C_8$, des esters méthacryliques d'alcanols en $C_1$-$C_8$, des composés vinyl-aromatiques et des dioléfines en $C_4$-$C_8$.

5. Utilisation selon l'une quelconque des revendications précédentes, la préparation contenant en outre un fluidifiant pour liants minéraux.

6. Utilisation selon l'une quelconque des revendications précédentes, la préparation étant utilisée en une proportion, calculée en matière solide, de 1 à 30% en poids par rapport à la fraction minérale des matériaux de construction.

7. Matériaux de construction à base de terre glaise ou d'argile contenant, par rapport à la fraction minérale, une proportion de 1 à 30% en poids d'une préparation exempte de polysulfures définie dans l'une quelconque des revendications 1 à 5, calculée en matière solide.

8. Matériaux de construction selon la revendication 7 contenant, par rapport à la fraction minérale, 0,1 à 10% en poids d'un fluidifiant pour liants minéraux.

9. Matériaux de construction selon la revendication 7 ou 8, contenant, par rapport à la fraction minérale, 5 à 250 % en poids de matières poreuses, comme la paille, le jonc, le liège, la pierre ponce, la mousse d'argile, la perlite, les copeaux de bois ou la sciure de bois.

10. Utilisation des matériaux de construction selon les revendications 7 à 9, dans la maçonnerie en pisé, pour le remplissage de cases dans les constructions en treillis ou avec des supports en bois, comme enduit ou mortier, pour la fabrication de pierres à bâtir ou pour le scellement de sols en surface ou en sous-sol, en particulier dans la construction de barrages et de digues.

11. Procédé pour le traitement de matériaux de construction à base de terre glaise ou d'argile dans lequel on ajoute aux matériaux de construction une préparation comme définie dans les revendications 1 à 5.

12. Procédé selon la revendication 11, dans lequel on ajoute, par rapport à la fraction minérale, 1 à 30 % en poids de la préparation.

13. Procédé selon la revendication 11 ou 12, destiné à améliorer la résistance mécanique, la stabilité, la résistance à l'eau et la maniabilité.